# EUROPEAN PATENT APPLICATION

(11) **EP 1 693 953 A1**
(43) Date of publication of application: **23.08.2006**
(21) Application number: 06250736.3
(22) Date of filing: 10.02.2006
(51) Int. Cl.: H02P 9/48, G05B 19/10

(54) **Adjustment and display of stored parameters**

(30) Priority: 18.02.2005 GB 0503466
(71) Applicant: Newage International Limited, Stamford, Lincolnshire PE9 2NB (GB)
(72) Inventor: Wright, Michael John, Ketton, Stamford, Lincolnshire PE9 3SR (GB)
(74) Representative: Williams, Michael Ian

(57) **Abstract**

The invention relates to a digital control circuit for an electrical machine. The digital control circuit comprises a processor arranged to execute a control or protection algorithm for the electrical machine. The circuit has an output to enable a value of at least one digital parameter of the algorithm to be read externally. The circuit is arranged to output an analog signal whose value corresponds to the value of the digital parameter. This can allow the value of a digital parameter to be read by a device such as a multimeter.

## Description

The present invention relates to the adjustment and display of parameters in digital control circuits for electrical machines. The invention has particular application in automatic voltage regulators (AVRs) for use with power generators.

In many control applications that use digital techniques there is a need to view and to adjust the parameters that characterise the control algorithms and/or protective functions. In most cases where equipment is positioned in permanent installations, this setting process is conducted once during the life time of the product. However, if the equipment is to be used in different applications, then it may be necessary to set the control parameters separately for each application.

Many power generators use an automatic voltage regulator (AVR) in order to control the generator output. Originally AVRs used analogue control circuits, and these allowed control parameters to be set by adjusting potentiometers. However digital AVRs are now increasingly used, as they allow more sophisticated control of the generator output.

In known digital AVRs, a separate user interface is provided in order to allow the user to view and to set parameters of the control algorithm. The user interface may be in the form of a suitably programmed personal computer which is connected to the digital AVR by means of a digital interface, or in the form of a bespoke interface having a display and a keypad for entering parameters. However, such an interface may be expensive, and the user may not always have such an interface available. There therefore exists the need for a mechanism by which a service engineer may view and/or adjust the parameters of a digital control circuit such as a digital AVR without the need for a specialist user interface.

According to a first aspect of the invention there is provided a digital control circuit for an electrical machine, the circuit comprising a processor arranged to execute a control or protection algorithm, the circuit having an output for reading out a value of at least one digital parameter of the algorithm, wherein the circuit is arranged to output an analogue signal whose value corresponds to the value of the digital parameter.

Arranging the circuit to output an analogue signal whose value corresponds to the value of the parameter allows the value of the parameter to be read using non-specialist equipment, such as a conventional multimeter. This thus provides a simple and convenient mechanism by which a user may read an internal parameter of a digital control circuit.

The present invention has particular application in reading and setting the parameters in a control circuit for a rotating electrical machine, such as a generator or an alternator, and thus the control circuit may be a control circuit for a rotating electrical machine. For example, the control circuit may be an automatic voltage regulator (AVR), and thus the algorithm may be a control algorithm for an automatic voltage regulator. Alternatively the control circuit may be a drive for a motor, such as a motor which is coupled to a generator.

The analogue signal may be either a voltage or a current, and it may be either a DC signal or an alternating signal such as a square wave or a sine wave. Where the analogue signal is a DC signal, the circuit may comprise a digital to analogue converter for producing the analogue signal.

Alternatively, the analogue signal may be a pulse width modulated signal, such as a pulse width modulated square wave. This can provide the advantage that the analogue signal can be produced directly by the microprocessor without the need for an analogue to digital converter. In this case the width of the output pulses will vary in dependence on the value of the parameter. The pulse width modulated signal may then be filtered to produce an average value, which average value corresponds to the value of the parameter. For example, a multimeter may provide the filtering as part of its input circuitry, and the value displayed by the multimeter will then correspond to the value of the parameter. Alternatively a filter may be provided as part of the control circuit.

Preferably the analogue output signal is in a form which can be read by a conventional multimeter. Since a service engineer will usually have a multimeter available, this can allow a service engineer to view the parameter in the field without the need to carry around a specialist user interface or a personal computer.

As well as the ability to read the value of the parameter, it may also be desirable to be able to set a value of a parameter, and thus the circuit may further comprise an input for adjusting at least one parameter of the algorithm. For example, the circuit may further comprise an analogue to digital converter for converting an analogue control signal into a digital signal for setting a value of the parameter.

The circuit may further comprise a component having a variable value (e.g. a variable resistor, such as a potentiometer, or a variable capacitor or inductor) for setting a value of the parameter. In this way the circuit itself can provide the mechanism for adjusting the parameter. Alternatively an external device could be used to set the value of the parameter.

In order to allow the value of the parameter to be set, the circuit may further comprise a switch having a first position and a second position, and the circuit may be arranged such that when the switch is in the first position the value of the digital parameter can be read externally, and when the switch is in the second position the value of the digital parameter can be set. The processor may then be arranged to read an initial value of the variable component, and to adjust the value of the analogue output signal in dependence on a change in the value of the variable component, when the switch is in the second position. For example, the processor may be arranged to adjust the value of the analogue output signal in proportion to the amount of deviation from the initial value. Alternatively, the processor may be arranged to increase or to decrease the value of the analogue output signal at a rate which depends on the amount by which the value of the variable component deviates from its initial value, when the switch is in the second position. For example, a positive and negative threshold may be set, and when the value of the variable component exceeds those thresholds the value of the analogue output signal may be incremented or decremented. Multiple thresholds may be set, to allow the value of the analogue output signal to be incremented or decremented at different rates. Alternatively the processor may be arranged to increase or to decrease the value of the analogue output signal at a rate which is in proportion to the amount of deviation from the initial value.

Preferably, the processor is arranged to read an initial value of the variable component when the switch is moved to the second position, and to prevent setting of the parameter unless the initial value of the variable component is within predetermined limits. In this way the microprocessor can ensure that the variable component is initially set to approximately its middle value, so as to allow the value of the parameter to be increased or decreased as required.

Preferably, in order to prevent the value of the digital control parameter from being accidentally changed to undesirable values, while the switch is in the second position, the actual value of the digital control parameter is not adjusted. Thus the processor may be arranged to store the value of the analogue output signal in a temporary storage location when the switch is in the second position. The processor may then be arranged to set the value of the digital parameter to the value stored in the temporary storage location when the switch is moved from the second position to the first position.

The processor may be arranged to time-out of a parameter setting mode if the switch has been in the second position for more than a predetermined period of time, or if no adjustments have been made for a predetermined period of time with the switch in the second position. In this way accidental adjustment of the parameters may be prevented. Preferably when the processor times out no adjustment to the parameter is made.

The circuit may further comprise a parameter selection switch, the circuit being arranged such that the position of the parameter selection switch determines which one of two or more parameters is to be read or set. The switch may be, for example, a dual in-line (DIL) switch, and the mode selecting switch may also be part of the DIL. For example, an n-way DIL switch (where n ≥ 2) can allow up to 2ⁿ⁻¹ parameters to be set, as well as allowing switching between a parameter reading mode and a parameter setting mode. Of course of types of switches such as a rotary switch could also be used.

The present invention also provides an Automatic Voltage Regulator (preferably for a generator) comprising a control circuit according to any of the preceding claims.

A corresponding method is also provided, and thus according to another aspect of the invention there is provided a method of reading a digital parameter of a control or protection algorithm executed by a digital control circuit, the method comprising outputting an analogue signal whose value corresponds to the value of the digital parameter, and reading the value of the analogue signal externally to the digital control circuit.

Any of the apparatus features may be provided as method features and *vice versa.*

The present invention may be implemented using hardware components or software modules or any combination thereof. For example, the analogue to digital converters and the digital to analogue converters may be software modules executed on the processor (or on another processor), or hardware or firmware components external to the processor.

Preferred features of the present invention will now be described, purely by way of example, with reference to the accompanying drawings, in which:
Figure 1 shows parts of a generating set;
Figure 2 shows parts of a control circuit in accordance with an embodiment of the invention; and
Figure 3 shows the DIL switch of Figure 2 in greater detail.

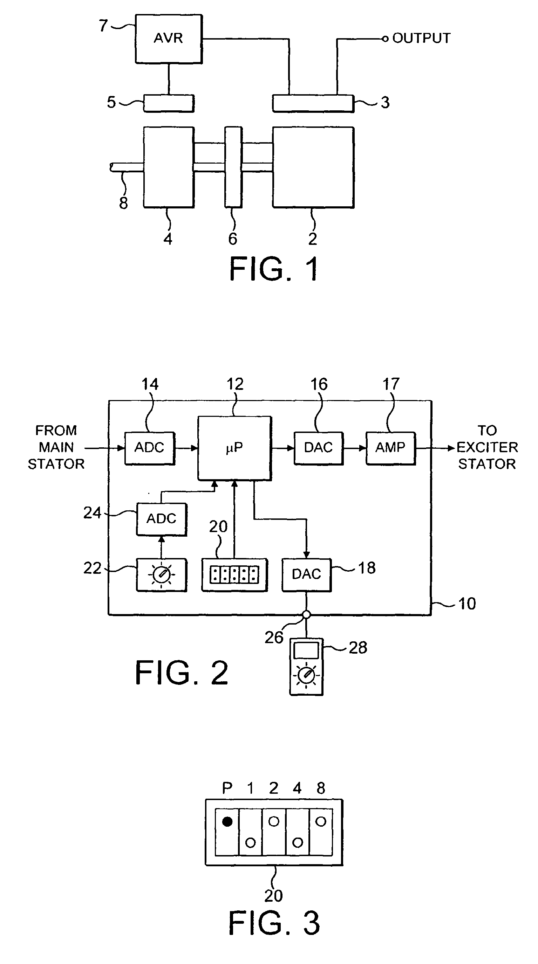

Figure 1 shows parts of a generating set with which the present invention may be used. Referring to Figure 1, the generator comprises a main rotor 2 and a main stator 3 which provides the output power. Current is supplied to the coils in the main rotor 2 by means of exciter rotor 4, exciter stator 5 and rotating diodes 6. The main stator also provides power for excitation of the exciter field via AVR 7, which is the controlling device governing the level of excitation supplied to the exciter field. The AVR 7 responds to a voltage sensing signal derived from the main stator winding. By controlling the low power of the exciter field, control of the high power requirement of the main field is achieved through the rectified output of the exciter armature.

The main rotor 2, exciter rotor 4 and rotating diodes 6 are all located on shaft 8 which is driven by a prime mover such as a diesel engine (not shown).
Figure 2 shows parts of a control circuit in accordance with an embodiment of the invention. Referring to Figure 2, control circuit 10 is an AVR which receives a sensed voltage from the output of a generator, performs a control algorithm, and outputs a signal which is supplied to a field winding of the generator. The control circuit 10 comprises a microprocessor 12 for performing the control algorithm, an analogue to digital converter (ADC) 14 for converting the sensed output from the generator into digital form, and a digital to analogue converter (DAC) 16 for producing an analogue output voltage which is amplified in amplifier 17 and supplied to a field winding of the generator.

Typically the control algorithm running on microprocessor 17 filters the incoming signal from the main stator, and compares the filtered signal to a reference signal in order to produce an error signal. This error signal is then used to control the voltage supplied to the generator exciter stator.

As part of the control algorithm, a number of control parameter are stored internally in the microprocessor 12. These may include parameters which control system gain, stability, damping, protection thresholds, acceleration and deceleration rates, and so forth. In general these parameters are set when the machine is first set up in a particular installation. However there may be a need to view and/or adjust these parameters at a later date either for diagnostic purposes, or because the installation is to be changed.

The control circuit 10 also comprises a digital to analogue converter 18, a dual in-line (DIL) switch 20, a potentiometer 22, an analogue to digital converter 24, and an output terminal 26. Also shown in Figure 2 is an external multimeter 28 which is connected to the output terminal 26.

Figure 3 shows the DIL switch 20 in greater detail. The DIL switch 20 has a total of five separate switches. The first of these switches P can be set in either a "parameter set" position or a "parameter read" position, and is used to select either a parameter setting mode or a parameter reading mode. The remainder of the switch positions, labelled 1, 2, 4, 8 in Figure 3, are parameter selection switches and are used to select a parameter to be set or read. In this example the four parameter selection switches would allow up to sixteen parameters to be selected. The documentation supplied with the control circuit informs the operator which switch positions correspond to which parameters.

In operation, when it is desired to read the value of a control parameter stored within the microprocessor 12, the switch P is set to the read position, and the remaining switches are used to select the parameter to be read. The microprocessor 12 senses the positions of the various switches in the DIL switch 20, and outputs to digital to analogue converter 18 the value of the parameter which is selected. The digital to analogue converter 18 converts this value into an analogue signal and supplies the analogue signal to the output terminal 26. The digital to analogue converter 18 scales the analogue output signal so that it has an appropriate range.

External multimeter 28 is connected to the output terminal 26 and reads the value of the output signal. The documentation supplied with the control circuit instructs the operator as to which range on the multimeter to select in order to read a particular parameter. For example, digital to analogue converter 18 may output a voltage of between 0 V and 5 V dc depending on the value of the parameter to be read, and the multimeter would then be set to read such a voltage range. The documentation supplied with the control circuit also specifies the scaling which is used when producing the output signal at the terminal 26, so that a service engineer or other user can determine from the value of the output signal as read by multimeter 28, the value of the control parameter which is stored internally in the microprocessor 12.

If it is desired to read the value of another control parameter, then the settings of the DIL switch 20 are adjusted accordingly, and the process is repeated.

The control circuit 10 shown in Figure 2 also allows a service engineer or other user to set values of control parameters within the microprocessor 12. When it is desired to set the value of a control parameter, the potentiometer 22 is first set to approximately its middle position. The parameter selection switches in DIL switch 20 are set to select the parameter which it is desired to adjust, and the programming switch P in the DIL switch 20 is then moved to the parameter set position. At this point, the microprocessor 12 reads the value set by the potentiometer 22 via an analogue to digital converter 24, and stores this value internally. This value is then considered as a null value for the purposes of setting the value of the control parameter. At the same time, the value of the control parameter to be set is read by the multimeter 28 via digital to analogue converter 18 and output terminal 26 in the same way as described above.

With the switch P in the set position, the microprocessor 12 reads the amount by which the potentiometer 22 deviates from the null position, and adjusts the value of the analogue output signal in proportion to the amount of deviation. Thus, if the potentiometer is turned from its null position, the reading of the multimeter 28 will vary in accordance with the amount of deviation. However the actual value of the internally stored parameter is not changed at this stage; instead the microprocessor 12 uses a temporary storage location to store the value of the analogue output signal while the switch P is in the set position.

When the reading on the multimeter 28 corresponds to the required value of the control parameter, the programming switch P is returned to the read position. At this point, the value of the internal control parameter is set to the temporarily stored value of the analogue output signal. In this way the internal parameter is set to a value corresponding to the displayed reading.

Other control parameters may then be set by making the appropriate selection on the DIL switch 20, and repeating the above procedure.

As an alternative to varying the analogue output signal in proportion to the amount of deviation of the potentiometer, the value of the output signal may be incremented or decremented at a rate which depends on the amount of deviation. For example, the deviation from the null position may be compared to both positive and negative thresholds, and the output signal may be incremented or decremented once these thresholds are exceeded. Multiple thresholds could be used for low, medium and high speed increments and decrements. Thus, the further potentiometer is turned from the null position, the quicker the parameter is adjusted. Returning the potentiometer to the null position (within the thresholds) stops the adjustment.

When the switch P is first moved to the set position, the microprocessor 12 checks that the potentiometer is approximately in the middle position, by comparing the value of the potentiometer to upper and lower thresholds. If the potentiometer is not within these thresholds then no action is taken.

The microprocessor 12 also operates a time-out, so that if no action is taken for a predetermined amount of time with the switch P in the set position, the microprocessor reverts to read mode. This can prevent accidental changing of the parameters if the switch P has been left in the set position. The setting mode can be re-activated by moving the switch first to the read position and then back to the set position.

It can be seen that the control circuit described above provides a simple and low cost method of viewing and adjusting parameters stored within the microprocessor 12. A standard multimeter is used to read the value of a control parameter both for diagnostic purposes and when setting the value of the parameter. Since a service engineer will usually have a standard multimeter available, this enables a service engineer to view and to set parameters without the need to carry around a specialist user interface or a personal computer.

The additional components required by the control circuit to enable the parameters to be read and adjusted is as follows:
- One single-turn potentiometer / trimmer
- One 'n' way DIL switch where n≥2 with 2n-1 = the number of parameters accessible
- Two dedicated low-current signal terminals accessible to the user.
   and in addition the following microcontroller/microprocessor resources:

- One analogue-digital input (input from trimmer - for example 8 bit)
- One digital-analogue output or a PWM output from one digital pin (output to dedicated terminals - for example 8 bit or above dependent upon precision of stored parameters)
- 'n' digital inputs where n≥2 with 2n-1 = the number of parameters accessible.
- A small software overhead.

With current microcontrollers or microprocessors the extra cost involved in providing these features is negligible and may be absorbed from spare / unused capacity. The extra potentiometer, switch and terminals are readily available components and do not add significant cost.

While preferred features of the invention have been described with reference to specific embodiments, it will be appreciated that variations are possible within the scope of the invention. For example, while the various analogue to digital and digital to analogue converters are shown in Figure 2 as being external to the microprocessor, some or all of them could also be implemented as software modules running inside the processor. Instead of producing a dc output signal, the microprocessor could produce a pulse width modulated square wave, which would avoid the need for a digital to analogue converter. In this case the width of the output pulses varies in dependence on the value of the parameter. The multimeter may filter the pulse width modulated square wave as part of its input circuitry, and the value displayed by the multimeter will then correspond to the value of the parameter.

## Claims

1. A digital control circuit for an electrical machine, the circuit comprising a processor arranged to execute a control or protection algorithm, the circuit having an output to enable a value of at least one digital parameter of the algorithm to be read externally, wherein the circuit is arranged to output an analogue signal whose value corresponds to the value of the digital parameter.

2. A circuit according to claim 1 wherein the control circuit is a control circuit for a rotating electrical machine.

3. A circuit according to claim 2 wherein the control circuit is an automatic voltage regulator.

4. A circuit according to any of the preceding claims, comprising a digital to analogue converter for producing the analogue signal.

5. A circuit according to any of claims 1 to 4, wherein the analogue signal is a pulse width modulated signal.

6. A circuit according to any of the preceding claims wherein the analogue output signal is in a form which can be read by a conventional multimeter.

7. A circuit according to any of the preceding claims wherein the circuit further comprises an input for adjusting at least one parameter of the algorithm.

8. A circuit according to claim 7, further comprising an analogue to digital converter for converting an analogue control signal into a digital signal for setting a value of the parameter.

9. A circuit according to claim 7 or 8, further comprising a component having a variable value for setting a value of the parameter.

10. A circuit according to any of claims 7 to 9, further comprising a switch having a first position and a second position, the circuit being arranged such that when the switch is in the first position the value of the digital parameter can be read externally, and when the switch is in the second position the value of the digital parameter can be set.

11. A circuit according to claim 10 when dependent on claim 9, wherein the processor is arranged to read an initial value of the variable component, and to adjust the value of the analogue output signal in dependence on a change in the value of the variable component, when the switch is in the second position.

12. A circuit according to claim 11, wherein the processor is arranged to increase or to decrease the value of the analogue output signal at a rate which depends on the amount by which the value of the variable component deviates from its initial value, when the switch is in the second position.

13. A circuit according to claim 11 or 12, wherein the processor is arranged to store the value of the analogue output signal in a temporary storage location when the switch is in the second position.

14. A circuit according to claim 13, wherein the processor is arranged to set the value of the digital parameter to the value stored in the temporary storage location when the switch is moved from the second position to the first position.

15. A circuit according to any of claims 10 to 14, wherein the processor is arranged to read an initial value of the variable component when the switch is moved to the second position, and to prevent setting of the parameter unless the initial value of the variable component is within predetermined limits.

16. A circuit according to any of claims 10 to 15, wherein the processor is arranged to time-out of a parameter setting mode if the switch has been in the second position for more than a predetermined period of time, or if no adjustments have been made for a predetermined period of time with the switch in the second position.

17. A circuit according to any of the preceding claims, further comprising a parameter selection switch, the circuit being arranged such that the position of the parameter selection switch determines which one of two or more parameters is to be read or set.

18. A circuit according to claim 17, wherein the parameter selection switch is a dual in-line switch.

19. An Automatic Voltage Regulator comprising a control circuit according to any of the preceding claims.

20. A method of reading a digital parameter of a control or protection algorithm executed by a digital control circuit in order to control an electrical machine, the method comprising outputting an analogue signal whose value corresponds to the value of the digital parameter, and reading the value of the analogue signal externally to the digital control circuit.
